# EUROPÄISCHE PATENTSCHRIFT

(11) **EP 1 152 566 B1**
(45) Veröffentlichungstag und Bekanntmachung des Hinweises auf die Patenterteilung: **09.05.2007**
(21) Anmeldenummer: 01106736.0
(22) Anmeldetag: 17.03.2001
(51) Int. Cl.: H04L 9/08

(54) **Verfahren zum Aufbau einer gesicherten Verbindung sowie Kommunikationsendgerät hierzu**
Method for setting up a secure connection and communications terminal therefore
Procédé d'établissement d'une liaison sécurisée ainsi que terminal de communication y relatif

(30) Priorität: 04.05.2000 DE 10021833
(43) Veröffentlichungstag der Anmeldung: 07.11.2001
(73) Patentinhaber: Tenovis GmbH & Co. KG, 60362 Frankfurt am Main (DE)
(72) Erfinder: Rohrdrommel, Dieter, 63477 Maintal (DE); Schlesinger, Jürgen, 64572 Büttelborg (DE)
(74) Vertreter: Tergau & Pohl Patentanwälte

(56) Entgegenhaltungen:
- EP-A- 0 800 328
- DE-B- 1 076 732
- DE-B- 2 115 664
- DE-C- 19 642 371
- US-A- 5 592 554
- US-A- 5 657 378
- US-A- 6 055 236
- SCHNEIDERS S ET AL: "VERSCHLUESSELUNG BEI ALLEN ISDN-VERBINDUNGEN" NTZ NACHRICHTENTECHNISCHE ZEITSCHRIFT, VDE VERLAG GMBH. BERLIN, DE, Bd. 50, Nr. 7, 1997, Seiten 50-52, XP000696828 ISSN: 0027-707X

## Beschreibung

### Stand der Technik

Zur gesicherten Informationsübertragung zwischen Kommunikationspartnern sind kryptographische Verfahren bekannt. Nach einem Schlüsseltausch erfolgt eine verschlüsselte Übertragung nach einem symmetrischen oder asymmetrischen Verschlüsselungsverfahren (NTZ, Heft 10/1999, Seiten 16 bis 17 "Kryptographie in der Praxis").

Aus der EP 0 632 616 P1 sowie NTZ, Heft 7/1997, Seiten 50 bis 52 "Verschlüsselung bei allen ISDN-Verbindungen", ist es bekannt, Kryptogeräte an einer oder mehreren Sₒ-Anschlüssen vor einer TK-Anlage einzurichten.

Die DE 21 15 664 B beschreibt eine Schaltungsanordnung für Fernsprechanlagen, die zusätzlich zu einem angewandten Sprachverschlüsselungsverfahren die Möglichkeit des Mithörens bedeutend erschwert. Die den Teilnehmern zugeordneten Sprachverschlüsselungseinrichtungen werden in einem von dem Gesprächspartnern bestimmten Code betrieben.

In der US 6,055,236 ist der Gebrauch eines Internet-Protokolls zu einem Schlüsselaustausch und zu einer Schlüsselgenerierung beschrieben.

### Vorteile der Erfindung

Mit den Maßnahmen der Ansprüche 1 und oder 10 ist es möglich einen gesicherten Informationstausch über eine schon bestehende ungesicherte Verbindung aufzubauen, je nach den individuellen Bedürfnissen der Kommunikationspartner. Bei bisherigen Lösungen wird der gesamte Informationstausch zwischen Kommunikationspartnern verschlüsselt. Die Kommunikationspartner haben dadurch keine Wahl selbst zu entscheiden, ob sie bestimmte Informationen gesichert oder ungesichert übertragen möchten. Die Erfindung liefert eine flexible Möglichkeit für Kommunikationspartner nur besonders schützenswerte Informationen gesichert zu übertragen und ansonsten einen ungesicherten Informationstausch zu führen. Die Entscheidung zu einem gesicherten Informationstausch kann bei Bedarf während einer bestehenden ungesicherten Verbindung getroffen werden. Damit ist das Verfahren nach der Erfindung flexibler als bekannte Verfahren mit starrer Zuordnung. Bei der Lösung gemäß NTZ, Heft 10/1997, s.o, besteht eine solche starre Zuordnung darin, daß für bestimmte Rufnummern stets eine Verschlüsselung vorgenommen wird. Der Teilnehmer hat dann selbst keine Eingriffsmöglichkeiten zur individuellen Änderung mehr. Auch die Kodierungstiefe kann frei vereinbart werden und sogar während einer Verbindung geändert werden.

Bei vorliegender Erfindung können die Kommunikationspartner auch selbst entscheiden mit welchem Aufwand, das heißt Sicherungsgrad, die gesicherte Informationsübertragung erfolgen soll. Es kann beispielsweise nur eine Sicherung durch eine Authentifikation erfolgen oder zusätzlich eine Verschlüsselung der übertragenen Datenpakete.

Über den Austausch von Leistungsmerkmalen wird eine auf die Bedürfnisse der Kommunikationspartner, beziehungsweise deren Kommunikationsendgeräte, angepaßte flexible Verschlüsselung ermöglicht.

Die Erfindung eignet sich vorzugsweise für den Einsatz in IP-Kommunikationsendgeräten um Schäden durch Eingriffe unberechtigter (Hacker) zu verhindern.

In den Unteransprüchen sind vorteilhafte Ausgestaltungen des Verfahrens beziehungsweise dem Kommunikationsendgerät aufgezeigt.

Mit den Maßnahmen gemäß Anspruch 2 läßt sich innerhalb eines standardisierten Übertragungsprotokolls der Schlüsseltausch zwischen den Kommunikationsendgeräten vornehmen, um damit zumindest eine Authentifikation der Kommunikationspartner zu erreichen.

Bei der Vorgehensweise nach Anspruch 3 ist darüber hinaus noch eine höhere Sicherheit dadurch gegeben, daß auch die übertragenen Informationspakete verschlüsselt werden.

Mit den Maßnahmen des Anspruchs 4 kann auf einfache Weise eine Abstimmung über das verwendete Verschlüsselungsverfahren getroffen werden.

Anspruch 5 läßt die Veränderung der Verschlüsselung während einer Übertragung zu.

Mit den Maßnahmen des Anspruch 6 wird dem Kommunikationspartner, zum Beispiel per LED, signalisiert, daß ein gesicherter Informationstausch aktiviert ist.

Die in den Ansprüchen 7 und 8 beschriebenen Maßnahmen zeigen die Schlüsselgenerierung beziehungsweise -aushandlung in den Kommunikationsgeräten auf. Durch diese Maßnahmen ist eine Schlüsselspeicherung in den Kommunikationsendgeräten nicht notwendig, was unter anderem auch den Mißbrauch, zum Beispiel unberechtigter Gebrauch eines Kommunikationsendgerätes, erschwert. Ein Unberechtigter kann dadurch in den Besitz des Schlüssels gelangen, da dieser nicht permanent im Endgerät gespeichert ist.

### Zeichnungen

Anhand der Zeichnung werden Ausführungsbeispiele der Erfindung näher erläutert. Es zeigen:
Figur 1 ein Beispiel für eine ungesicherte Übertragung,
Figur 2 ein Kommunikationsendgerät mit Verschlüsselungselement,
Figur 3 und 4 einen gesicherten Informationstausch mit Authentifikation und Verschlüsselung von Datenpaketen,
Figur 5 ein Blockschaltbild für ein Kommunikationsendgerät mit Verschlüsselungsmodul.

### Beschreibung von Ausführungsbeispielen

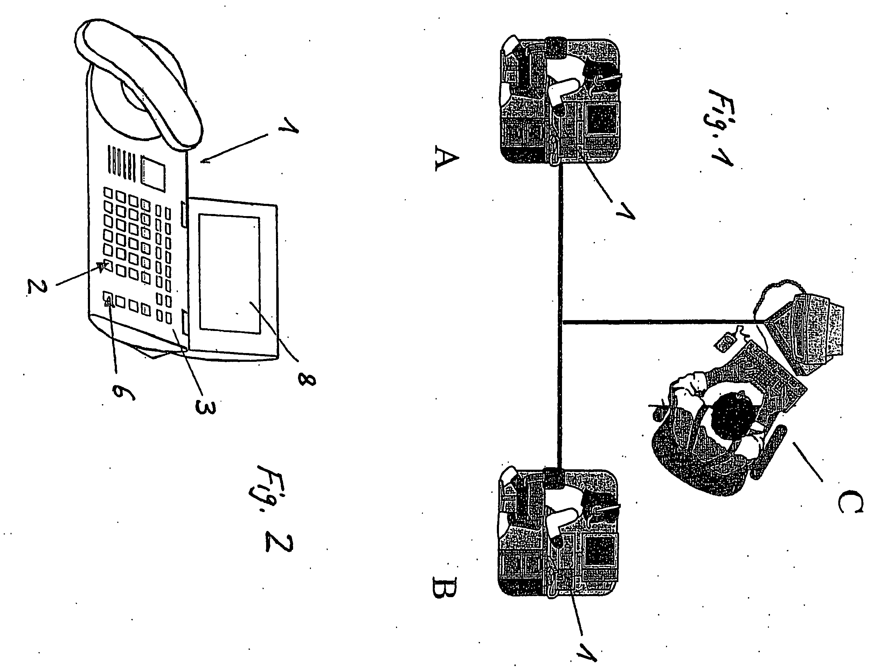

Bei dem in Figur 1 dargestellten Szenario sind zwei Kommunikationspartner A und B mit ihren Kommunikationsendgeräten 1 über das Internet verbunden, um ein IP-Telefongespräch abzuwickeln. Da die Verbindung ungesichert ist, kann ein unberechtigter C (Hacker) die Sprachinformation der Kommunikationspartner A und B durch Manipulation seines Kommunikationsendgerätes (Computer) empfangen und mithören. Um dies zu verhindern, können sich nach der Erfindung die beiden Kommunikationspartner jederzeit während einer bestehenden Verbindung einigen, einen gesicherten Informationstausch über diese bestehende ungesicherte Verbindung aufzubauen. Dazu betätigen sie an ihren Kommunikationsendgeräten 1 ein Verschlüsselungselement 2 (Figur 2), vorzugsweise eine Verschlüsselungstaste, die in die Bedienoberfläche 3 ihres Kommunikationsendgerätes 1 integriert ist. Vorzugsweise ist folgender Ablauf vorgesehen:
- Die Grundeinstellungen sind in den IP-Kommunikationsendgeräten, zum Beispiel IP-Telefonen, vorgenommen,
- es wird ein Telefonat zwischen zwei Kommunikationspartnern aufgebaut,
- die Kommunikationspartner einigen sich darauf, ein vertrauliches gesichertes Gespräch zu führen,
- die Kommunikationspartner drücken an ihren IP-Kommunikationsgeräten die Verschlüsselungstaste 2,
- die IP-Kommunikationsendgeräte einigen sich auf ein Verschlüsselungsverfahren und bauen eine gesicherte Verbindung auf der bestehenden Verbindung auf,
- die IP-Kommunikationsendgeräte signalisieren den Kommunikationspartnern durch eine Anzeige in einem Signalisierungselement 6 (LED) das erfolgreiche Zustandekommen der gesicherten Verbindung,
- durch erneutes Drücken der Verschlüsselungstaste 2 wird die gesicherte Verbindung auf der bestehenden Verbindung abgebaut und durch das Erlöschen der Anzeige im Signalisierungselement 6 signalisiert,
- das Gespräch kann ungesichert fortgeführt werden,
- in jedem Stadium des Gesprächs kann/können die Verbindung/en durch Auflegen beendet werden.

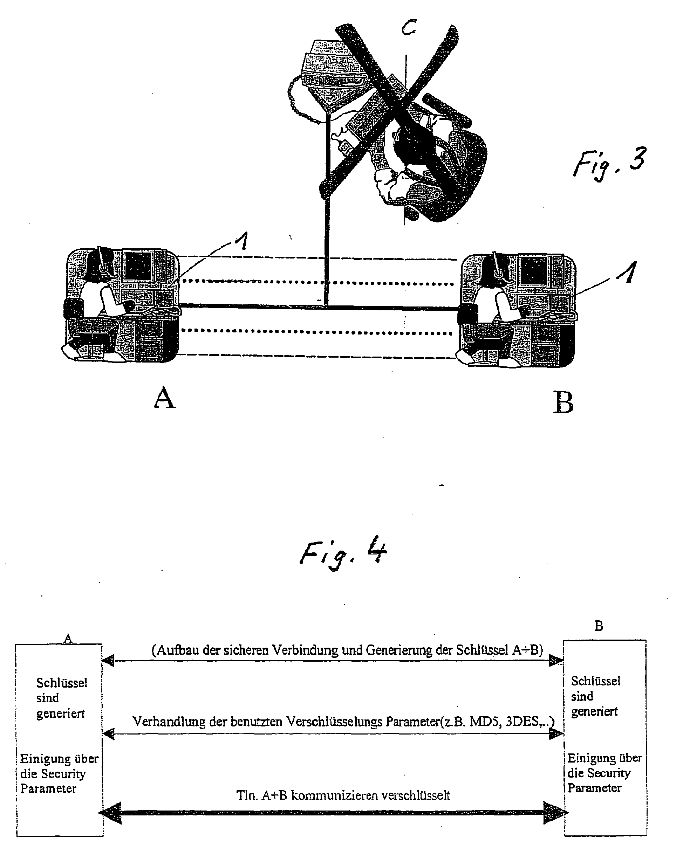

Wie Figur 3 zeigt, kann nach dem Aufbau des gesicherten Informationtausches der Unberechtigte C die ausgetauschte Information zwischen den Kommunikationspartnern A und B nicht mehr mithören, beziehungsweise ihren Sinngehalt nicht mehr verstehen, da der Informationstausch authentifiziert (dargestellt durch Punktierung) erfolgt und gegebenenfalls die übertragenen Datenpakete zusätzlich verschlüsselt (gestrichelt) sind. Der Grad der Verschlüsselung kann zwischen den beiden Kommunikationspartnern beliebig vereinbart werden unter der Voraussetzung, daß die Kommunikationsendgeräte der Kommunikationspartner über die gleichen Leistungsmerkmale, zum Beispiel Fähigkeiten verfügen, das heißt gleiche Verschlüsselungsverfahren verwenden können. Um dies sicherzustellen, verhandeln die Kommunikationspartner nach dem Aufbau der sicheren Verbindung und Generierung der Schlüssel A + B (Figur 4) über die benutzten Verschlüsselungsparameter, zum Beispiel MD5, SHA-1, 3 DES ... Alle diese Verschlüsselungsparameter (Security-Parameter) sind administrierbar und können jederzeit geändert werden. Unter der Annahme, daß in den Kommunikationsendgeräten 1 keine Schlüssel gespeichert sind, wird vorzugsweise bei Aufbau der gesicherten Verbindung über ein Netz mit standardisiertem Übertragungsprotokoll, zum Beispiel Internet-Protokoll, ein Schlüsseltausch zwischen den Kommunikationspartnern A und B innerhalb dieses Übertragungsprotokolls vorgenommen. Zur Schlüsselgenerierung in den IP-Telefonen kann vorteilhaft das Internet-Key-Exchange Verfahren benutzt werden. Die Schlüssel werden ausgehandelt, zum Beispiel mit Hilfe des Diffie-Hellman-Verfahrens.

Wenn außer der Authentifizierung noch eine Datenverschlüsselung der übertragenen Datenpakete gewünscht ist, kann der ESP (Encapsulated Security Payload) -Mode im Internet-Protokoll benutzt werden.

Die Erfindung hat den Vorteil, daß die Verschlüsselungsparameter während einer bestehenden Verbindung veränderbar sind. Damit läßt sich der Verschlüsselungsgrad, das heißt insbesondere die Kodierungstiefe je nach den Bedürfnissen der Kommunikationspartner ändern.

Zur Signalisierung einer gesicherten Verbindung in den Kommunikationsendgeräten 1 kann eine Signalisierung in Form eines Signalisierungselements 6 in der Bedienoberfläche 3 vorgesehen sein, beziehungsweise im Display 8 integriert sein. Bei einem gesicherten Informationstausch erscheint beispielsweise ein Blinkzeichen im Display mit oder ohne Texteinblendung, was auf den gesicherten Informationstausch hinweist.

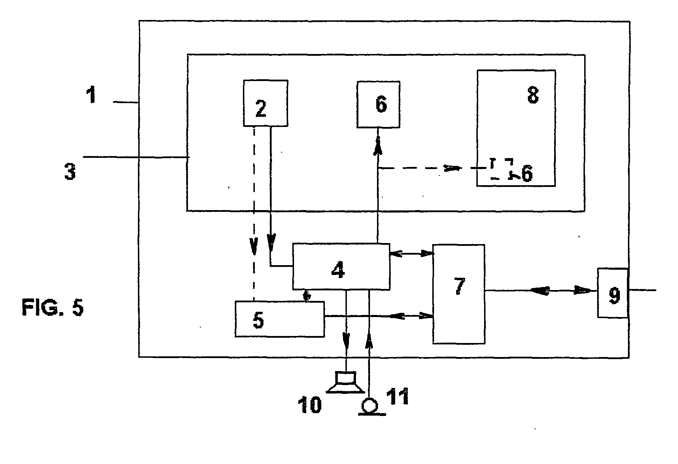

Den prinzipiellen Aufbau eines erfindungsgemäßen Kommunikationsendgerätes 1 - IP-Telefons - zeigt Figur 5. In Figur 5 sind insbesondere solche Baugruppen dargestellt, die das erfindungsgemäße Kommunikationsendgerät von einem herkömmlichen Kommunikationsendgerät unterscheiden. Das IP-Telefon weist nach außen eine Schnittstelle 9 auf, über die sowohl die gesicherte als auch die ungesicherte Verbindung geführt wird. Bei ungesicherter Verbindung gelangen die Gesprächsdaten oder sonstigen Übertragungsdaten der Kommunikationspartner von der Schnittstelle 9 über die Protokolleinheit 7 und die Steuereinrichtung 4 zur Wiedergabeeinheit 10. Die vom Mikrofon 11 des Kommunikationsendgerätes 1 erzeugten Gesprächsdaten gelangen über die Steuereinrichtung 4, die Protokolleinheit 7 in umgekehrter Richtung zur Schnittstelle 9.

Nach Aufbau dieser üblichen Verbindung kann durch Aktivieren des Verschlüsselungselements 2, zum Beispiel Drücken einer Taste in der Bedienoberfläche 3 der gesicherte Informationstausch aufgebaut werden. Das Tastensignal wird zur Steuereinrichtung 4 geleitet, die daraufhin das Verschlüsselungsmodul 5 mit der an die Schnittstelle 9 angeschlossenen Protokolleinheit 7 verbindet. Alternativ kann das Verschlüsselungselement 2 auch direkt mit dem Verschlüsselungsmodul 5 verbunden sein um direkt aktiviert zu werden (gestrichelt).

Nun bauen die Verschlüsselungsmodule 5 beider Kommunikationspartner eine gesicherte Verbindung auf, indem zuerst die Schlüssel generiert werden und danach die Verschlüsselungsparameter ausgetauscht werden. Das Zustandekommen der gesicherten Verbindung wird in dem Signalisierungselement 6 angezeigt, welches aus einer separaten LED in der Bedienoberfläche 3 bestehen kann oder im Display 8 integriert sein kann (gestrichelte Linienführung).

Die vom Mikrofon 11 erzeugten Gesprächsdaten werden nach Aufbau der gesicherten Verbindung zuerst über das Verschlüsselungsmodul 5 geführt, dort entsprechend verschlüsselt und erst dann an die Protokolleinheit 7 weitergegeben. Im Falle eingehender gesicherter Daten erkennt die Protokolleinheit 7 das Vorliegen dieser gesicherten Daten, zum Beispiel im ESP-Mode und leitet diese zuerst zum Verschlüsselungsmodul 5, daß diese mit dem gleichen Schlüssel entschlüsselt und erst dann zur Wiedergabeeinheit 10 leitet.

Für den Abbau der gesicherten Verbindung wird die Taste 2 nochmals gedrückt. Nach Bestätigung durch den Kommunikationspartner und Auswertung des dann geänderten Protokolls erfolgt der Gesprächsdatentausch nicht mehr über die Verschlüsselungsmodule 5, sondern wird im Empfangsbetrieb direkt an die Wiedergabeeinheit 10 weitergeleitet, beziehungsweise im Sendebetrieb direkt vom Mikrofon 11 zur Protokolleinheit 7 weitergeleitet.

Zur Authentifikation der Kommunikationspartner und zur Verschlüsselung der übertragenen Daten sei auf die einschlägige Literatur auf diesem Gebiet verwiesen, zum Beispiel auf die eingangs genannten NTZ-Artikel. Die Schlüssel können entweder in dem Verschlüsselungsmodul 5 abgespeichert sein oder wie Figur 4 zeigt mittels des Internet-Exchange-Protokolls in den Kommunikationsendgeräten generiert werden.

## Patentansprüche

1. Verfahren zum Aufbau einer gesicherten Verbindung zwischen Kommunikationspartnern mit folgenden Schritten:
- es wird über ein Internetprotokoll eine Verbindung zwischen Kommunikationsendgeräten (1) von Kommunikationspartnern aufgebaut, und
- die Kommunikationspartner einigen sich, einen gesicherten Informationsaustausch zu führen durch Betätigen eines Verschlüsselungselements (2) an ihren Kommunikationsendgeräten (1), **dadurch gekennzeichnet, dass**
- sich die Kommunikationsendgeräte (1) nach Aktivieren des Verschlüsselungselements (2) auf ein Verschlüsselungsverfahren einigen, indem von den Kommunikationspartnern Leistungsmerkmale, also die Fähigkeit der Endgeräte hinsichtlich bestimmter Verschlüsselungsverfahren und/oder Verschlüsselungsparameter, ausgetauscht werden, und einen gesicherten Informationsaustausch auf der bestehenden Verbindung aufbauen.

2. Verfahren nach Anspruch 1, **dadurch gekennzeichnet, dass** bei Aufbau der gesicherten Verbindung über ein Netz mit standardisiertem Übertragungsprotokoll, zum Beispiel Internetprotokoll, ein Schlüsseltausch innerhalb dieses Übertragungsprotokolls vorgenommen wird, um den beziehungsweise die Schlüssel in den Endgeräten (1) zu generieren.

3. Verfahren nach Anspruch 1 oder 2, **dadurch gekennzeichnet, dass** für eine Internet-Protokollübertragung außer einer Authentifikation eine zusätzliche Datenverschlüsselung, zum Beispiel gemäß dem ESP, Encapsulated Security Payload-Mode verwendet wird.

4. Verfahren nach einem der Ansprüche 1 bis 3, **dadurch gekennzeichnet, dass** bei einem Aufbau einer gesicherten Verbindung eine Verhandlung über die benutzten Verschlüsselungsparameter der Endgeräte vorgenommen wird und nach Einigung über die Verschlüsselungsparameter der verschlüsselte Informations aus tausch erfolgt.

5. Verfahren nach Anspruch 4, **dadurch gekennzeichnet, dass** die Verschlüsselungsparameter während einer bestehenden Verbindung veränderbar sind.

6. Verfahren nach einem der Ansprüche 1 bis 5, **dadurch gekennzeichnet, dass** das Zustandekommen eines gesicherten Informations aus tausches in den Endgeräten (1) signalisiert wird.

7. Verfahren nach einem der Ansprüche 1 bis 6, **dadurch gekennzeichnet, dass** das Internet-Key-Exchange-Verfahren benutzt wird, um die Schlüssel für den gesicherten Informations aus tausch in den Kommunikationsendgeräten (1) zu generieren.

8. Verfahren nach einem der Ansprüche 3 bis 6, **dadurch gekennzeichnet, dass** die Schlüssel insbesondere dann nach dem Diffie-Hellman-Verfahren ausgehandelt werden.

9. Kommunikationsendgerät (1), insbesondere Telefon-Endgerät, für eine Übertragung gemäß dem Internetprotokoll, **dadurch gekennzeichnet, dass** ein Verschlüsselungselement (2) im Kommunikationsendgerät vorgesehen ist, welches mit einem Verschlüsselungsmodul (5) unmittelbar oder mittelbar über eine Steuereinrichtung (4) derart in Wirkverbindung steht, dass nach dessen Betätigung durch die Kommunikationspartner ein gesicherter Informationsaustausch auf einer bereits bestehenden ungesicherten Verbindung aufgebaut wird und die Kommunikationspartner Leistungsmerkmale, also die Fähigkeit ihrer Endgeräte, bestimmte Verschlüsselungsverfahren und/oder Verschlüsselungsparameter zu verwenden, austauschen.

10. Kommunikationsgerät nach Anspruch 9, **dadurch gekennzeichnet, dass** das Verschlüsselungselement (2) derart mit der Steuereinrichtung (4) in Wirkverbindung steht, dass bei einer nochmaligen Betätigung des Verschlüsselungselements (2) der gesicherte Informationsaustausch abgebaut wird und nur noch ein ungesicherter Informations aus tausch möglich ist.

11. Kommunikationsendgerät nach Anspruch 9 oder 10, **dadurch gekennzeichnet, dass** das Verschlüsselungselement (2) in der Bedienoberfläche (3) integriert ist.

12. Kommunikationsendgerät nach einem der Ansprüche 9 bis 11, **dadurch gekennzeichnet, dass** das Kommunikationsendgerät (1) ein Verschlüsselungsmodul (5) aufweist, welches von dem Verschlüsselungselement (2) beziehungsweise der mit dieser in Wirkverbindung stehenden Steuereinrichtung (4) aktivierbar ist.

13. Kommunikationsendgerät nach einem der Ansprüche 9 bis 12, **dadurch gekennzeichnet, dass** ein Signalisierungselement (6) vorzugsweise integriert in die Bedienoberfläche (3) des Kommunikationsendgeräts (1) vorgesehen ist, welches den gesicherten Informationsaustausch anzeigt.

14. Kommunikationsendgerät nach einem der Ansprüche 9 bis 13, **dadurch gekennzeichnet, dass** eine Protokolleinheit (7) im Kommunikationsendgerät (1) vorgesehen ist, die die verschlüsselten Ausgangsdaten des Verschlüsselungsmoduls (5) in das Übertragungsprotokoll einbindet.

## Claims

1. Method for setting up a secured connection between communication partners having the following steps:
- a connection between communication terminals (1) of communication partners is set up using an Internet protocol, and
- the communication partners agree to conduct a secured information exchange by activating an encryption element (2) on their communication terminals (1),
**characterized in that**
- following activation of the encryption element (2), the communication terminals (1) agree on an encryption method, **in that** performance characteristics, that is to say the capability of the terminals with respect to particular encryption methods and/or encryption parameters, are exchanged by the communication partners, and set up a secured information exchange on the existing connection.

2. Method according to Claim 1, **characterized in that** when the secured connection is set up over a network having a standardized transmission protocol, for example Internet protocol, an exchange of keys is performed within said transmission protocol in order to generate the key(s) in the terminals (1).

3. Method according to Claim 1 or 2, **characterized in that**, besides an authentication, an additional data encryption, for example according to the ESP Encapsulated Security Payload mode, is used for an Internet protocol transmission.

4. Method according to one of Claims 1 to 3, **characterized in that** when a secured connection is set up, the encryption parameters used by the terminals are negotiated, and the encrypted information exchange is performed following agreement on the encryption parameters.

5. Method according to Claim 4, **characterized in that** the encryption parameters can be changed during an existing connection.

6. Method according to one of Claims 1 to 5, **characterized in that** the establishment of a secured information exchange is signalled in the terminals (1).

7. Method according to one of Claims 1 to 6, **characterized in that** the Internet Key Exchange method is used to generate the keys for the secured information exchange in the communication terminals (1).

8. Method according to one of Claims 3 to 6, **characterized in that** the keys are then negotiated in particular according to the Diffie-Hellman method.

9. Communication terminal (1), in particular telephone terminal, for a transmission according to the Internet protocol, **characterized in that** an encryption element (2) is provided in the communication terminal which is operatively connected to an encryption module (5) directly or indirectly via a control device (4) in such a way that, following its activation by the communication partners, a secured information exchange is set up on an existing unsecured connection, and the communication partners exchange performance characteristics, that is to say the capability of their terminals to use particular encryption methods and/or encryption parameters.

10. Communication terminal according to Claim 9, **characterized in that** the encryption element (2) is operatively connected to the control device (4) in such a way that, when the encryption element (2) is activated once more, the secured information exchange is cleared and only an unsecured information exchange is then possible.

11. Communication terminal according to Claim 9 or 10, **characterized in that** the encryption element (2) is integrated in the user interface (3).

12. Communication terminal according to one of Claims 9 to 11, **characterized in that** the communication terminal (1) has an encryption module (5) which can be activated by the encryption element (2) or, respectively, the control device (4) operatively connected thereto.

13. Communication terminal according to one of Claims 9 to 12, **characterized in that** a signalling element (6) preferably integrated in the user interface (3) of the communication terminal (1) is provided which indicates the secured information exchange.

14. Communication terminal according to one of Claims 9 to 13, **characterized in that** a protocol unit (7) is provided in the communication terminal (1), which protocol unit binds the encrypted output data of the encryption module (5) into the transmission protocol.

## Revendications

1. Procédé d'établissement d'une liaison sécurisée entre des partenaires de communication comprenant des stades suivants :
- on établit par un protocole Internet une liaison entre des terminaux (1) de communication de partenaires de communication ; et
- les partenaires de communication s'accordent à mener un échange d'informations sécurisé en actionnant un élément (2) de chiffrement sur leurs terminaux (1) de communication,
**caractérisé en ce que**
- les terminaux (1) de communication s'accordent après activation de l'élément (2) de chiffrement sur un procédé de chiffrement par le fait qu'il est échangé par les partenaires de communication des facilités offertes aux usagers, donc la capacité des terminaux en ce qui concerne le procédé de chiffrement déterminé et/ou les partenaires de chiffrement, et établissent un échange d'informations sécurisé sur la liaison existante.

2. Procédé suivant la revendication 1, **caractérisé en ce que**, lors de l'établissement de la liaison sécurisée, on effectue par un réseau ayant un protocole de transmission normalisé, par exemple le protocole Internet, un échange de clés à l'intérieur de ce protocole de transmission pour engendrer la ou les clés dans les terminaux (1).

3. Procédé suivant la revendication 1 ou 2, **caractérisé en ce que**, pour une transmission par protocole Internet, on effectue, outre une authentification, un chiffrement supplémentaire de données, par exemple suivant le mode ESP, Encapsulated Security Payload.

4. Procédé suivant l'une des revendications 1 à 3, **caractérisé en ce que**, pour l'établissement d'une liaison sécurisée, on effectue un traitement par les paramètres de chiffrement utilisés des terminaux et, après accord sur les paramètres de chiffrement, on effectue l'échange d'information chiffré.

5. Procédé suivant la revendication 4, **caractérisé en ce que** les paramètres de chiffrement sont modifiables pendant une liaison existante.

6. Procédé suivant l'une des revendications 1 à 5, **caractérisé en ce que** l'on signale l'établissement d'un échange d'informations sécurisé aux terminaux (1).

7. Procédé suivant l'une des revendications 1 à 6, **caractérisé en ce que** l'on utilise le procédé Internet Key Change pour engendrer les clés pour l'échange d'informations sécurisé dans les terminaux (1) de communication.

8. Procédé suivant l'une des revendications 3 à 6, **caractérisé en ce que** les clés sont manipulées notamment alors par le procédé Diffie Hellman.

9. Terminal (1) de communication, notamment terminal téléphonique, pour une transmission suivant le protocole Internet, **caractérisé en ce qu'**il est prévu un élément (2) de chiffrement dans le terminal de communication, qui coopère avec un module (5) de chiffrement directement ou indirectement par un dispositif (4) de commande, de façon qu'après son actionnement par les partenaires de communication, il est établi un échange d'informations sécurisé sur une liaison non sécurisée déjà existante et les partenaires de communication échangent des facilités offertes aux usagers, donc la capacité de leurs terminaux d'utiliser des procédés de chiffrement déterminés et/ou des paramètres de chiffrement déterminés.

10. Terminal de communication suivant la revendication 9, **caractérisé en ce que** l'élément (2) de chiffrement coopère avec le dispositif (4) de commande, de façon à ce que, lorsque l'élément (2) de chiffrement est actionné encore une fois, il est mis fin à l'échange d'informations sécurisé et seul un échange d'informations non sécurisé est encore possible.

11. Terminal de communication suivant la revendication 9 ou 10, **caractérisé en ce que** l'élément (2) de chiffrement est intégré à la surface (3) de service.

12. Terminal de communication suivant l'une des revendications 9 à 11, **caractérisé en ce que** le terminal (1) de communication a un module (5) de chiffrement qui peut être activé par l'élément (2) de chiffrement ou par le dispositif (4) de commande coopérant avec lui.

13. Terminal de communication suivant l'une des revendications 9 à 12, **caractérisé en ce qu'**un élément (6) de signalisation est prévu en étant de préférence intégré dans la surface (3) de service du terminal (1) de communication, cet élément indiquant l'échange d'informations sécurisé.

14. Terminal de communication suivant l'une des revendications 9 à 13, **caractérisé en ce qu'**il est prévu une unité (7) de protocole dans le terminal (1) de communication, unité qui entre les données de sortie chiffrées du module (5) de chiffrement dans le protocole de transmission.
